# DEMANDE DE BREVET EUROPEEN

(11) **EP 1 129 898 A1**
(43) Date de publication de la demande: **05.09.2001**
(21) Numéro de dépôt: 01400421.2
(22) Date de dépôt: 19.02.2001
(51) Int. Cl.: B60Q 1/076

(54) **Projecteur de véhicule automobile muni de moyens perfectionnés de montage d'un correcteur d'orientation de faisceau**

(30) Priorité: 02.03.2000 FR 0002684
(71) Demandeur: VALEO VISION, 93012 Bobigny Cédex (FR)
(72) Inventeur: Casses, Daniel, 93012 Bobigny Cedex (FR); Virette, Jacques, 93012 Bobigny Cedex (FR)

(57) **Abrégé**

L'invention concerne un projecteur (30) de véhicule automobile comprenant un réflecteur et un correcteur de la position dudit réflecteur en fonction de signaux de commande, le projecteur comprenant un élément de montage (35) sur lequel le correcteur est destiné à être monté, caractérisé en ce que l'élément de montage (35) du projecteur comprend des moyens aptes à se déformer lors du montage du correcteur sur l'élément de montage.

## Description

La présente invention a trait d'une façon générale aux dispositifs de commande de l'orientation des faisceaux lumineux des projecteurs de véhicules automobiles.

On connaît déjà de tels dispositifs de commande, dont la vocation première est de donner aux faisceaux lumineux des projecteurs du véhicule une orientation en site correcte pour différentes conditions de charge du véhicule, qui lui confèrent différentes positions d'assiette.

Ces dispositifs comprennent généralement un correcteur comprenant un moteur électrique, monté dans le boîtier du projecteur et relié par des câbles à un organe de commande intégré dans le tableau de bord du véhicule pour être manipulé par le conducteur du véhicule.

En fonction des signaux de commande transmis par l'organe de commande, le correcteur modifie grâce au moteur électrique l'inclinaison du réflecteur du projecteur dans le boîtier, pour amener ledit réflecteur dans une position désirée.

On comprend que pour remplir efficacement sa fonction qui met en oeuvre des mouvements assez courts pour des modifications importantes de la hauteur du faisceau, la position du correcteur par rapport au réflecteur ne doit pas varier dans le temps.

Or, dans le boîtier du projecteur où le correcteur est intégré, les vibrations induites par le fonctionnement du véhicule peuvent modifier la position ou l'orientation du correcteur, voire endommager celui-ci. Un problème inhérent à l'utilisation d'un correcteur est donc la tenue dans le temps du correcteur dans le boîtier du projecteur.

Pour assurer que le correcteur est convenablement fixé à l'intérieur du boîtier du projecteur et présente une bonne tenue en vibration, on encastre habituellement un joint élastique porté par une partie saillante de montage du correcteur dans une ouverture d'un élément de structure du boîtier du projecteur. Cette solution utilisant un joint permet ainsi de protéger le correcteur des vibrations lors de la marche du véhicule.

Mais un inconvénient de cette solution est qu'elle nécessite l'ajout de la pièce supplémentaire qu'est le joint, ce qui entraîne une augmentation du prix de revient du dispositif et de son temps d'assemblage.

Le but principal de la présente invention est de permettre de monter un correcteur dans un boîtier de projecteur sans joint, tout en garantissant pour le correcteur des caractéristiques de tenue en vibration similaires à celles des correcteurs actuels montés avec un joint.

Un autre but de l'invention est de permettre en outre l'utilisation de correcteurs standards. Cet aspect est également important car sur certains modèles de véhicule, le correcteur tend à devenir un élément « consommable » pouvant être remplacé ; pour des raisons de commodité logistique et de coût, il est avantageux de pouvoir mettre en oeuvre de simples correcteurs de type connu.

Pour atteindre ces buts, l'invention propose un projecteur de véhicule automobile comprenant un réflecteur et un correcteur de la position dudit réflecteur en fonction de signaux de commande, le projecteur comprenant un élément de montage sur lequel le correcteur est destiné à être monté, caractérisé en ce que l'élément de montage du projecteur comprend des moyens aptes à se déformer lors du montage du correcteur sur l'élément de montage.

Des aspects préférés, mais non limitatifs du projecteur selon l'invention sont les suivants :
- lesdits moyens aptes à se déformer sont venus de matière avec l'élément de montage du projecteur.
- lesdits moyens aptes à se déformer sont aptes à stabiliser la position du correcteur sur l'élément de montage.
- la déformation que peuvent subir lesdits moyens aptes à se déformer est une déformation élastique.
- lesdits moyens aptes à se déformer comprennent un élément mince.
- lesdits moyens aptes à se déformer sont venus de matière avec l'élément de montage du projecteur.
- lesdits moyens aptes à se déformer sont des lamelles saillantes hors d'une face de l'élément de montage du projecteur.
- les lamelles sont adjacentes à une ouverture de l'élément de montage du correcteur destinée à recevoir une partie de montage dudit correcteur.
- les lamelles sont inclinées par rapport à la surface de l'élément de montage du correcteur.
- toutes les lamelles ont sensiblement la même inclinaison par rapport à la surface de l'élément du montage du correcteur.
- la déformation que peuvent subir lesdits moyens aptes à se déformer est une déformation plastique.
- la dureté de l'élément du correcteur est sensiblement inférieure à la dureté de parties du correcteur qui coopèrent, lors du montage du correcteur sur ledit élément de montage, avec cet élément de montage pour le déformer plastiquement.
- l'épaisseur de l'élément de montage du projecteur est supérieure à la distance séparant lesdites parties du correcteur du corps du correcteur.
- lesdites parties du correcteur sont des pattes saillantes hors du correcteur.
- le correcteur comporte des pattes saillantes, dont le côté tourné vers le correcteur comporte au moins une face inclinée pour faciliter l'engagement du correcteur avec la partie de montage du projecteur.

D'autres aspects, buts et avantages de l'invention apparaîtront mieux à la lecture de la description suivante, donnée à titre d'exemple et faite en référence aux dessins annexés, sur lesquels :
- la figure 1 est une vue en perspective d'un correcteur classique, destiné à être monté dans un projecteur de véhicule automobile selon l'invention,
- la figure 2 est une vue schématique en coupe d'un projecteur de véhicule automobile à l'intérieur duquel est monté un correcteur,
- la figure 3 est une vue en élévation du contour d'une ouverture d'un élément de structure d'un projecteur de véhicule automobile selon l'invention, destinée à recevoir un correcteur,
- la figure 4 est une vue partielle de derrière d'un boîtier projecteur de véhicule automobile selon l'invention,
- la figure 5 est une représentation schématique d'un correcteur amené en engagement dans une partie de montage d'un projecteur de véhicule automobile selon une variante de l'invention.

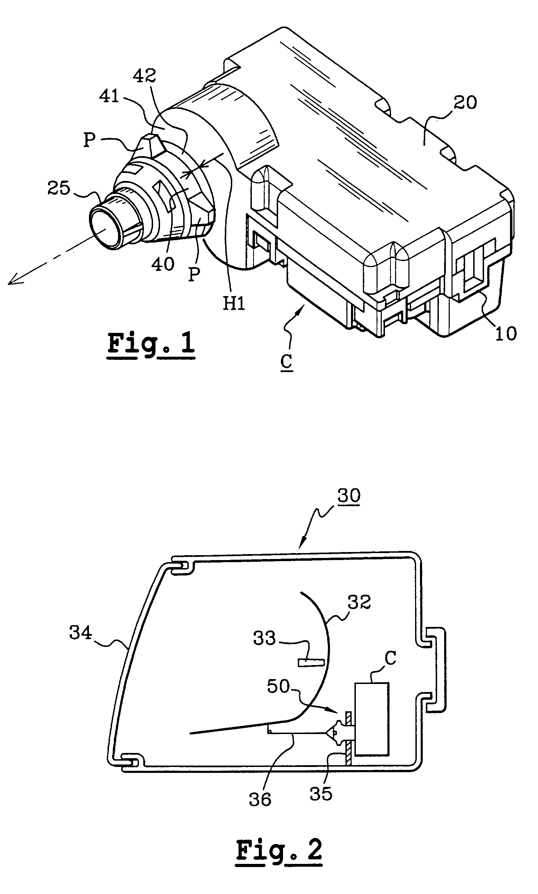

En référence à la figure 1, on a représenté un correcteur classique C, comportant un connecteur 10 et un boîtier 20. Le connecteur 10 permet de relier, via des câbles non représentés sur les figures, le correcteur à un organe de commande manuelle manipulé par le conducteur du véhicule, ou encore à un dispositif de commande automatique répondant à des capteurs d'assiette du véhicule.

Le boîtier 20 renferme un moteur électrique actionné par les signaux de commande transmis par les câbles, et possède une partie de support axial, ou canon, 25 destinée à contenir l'arbre de sortie (non représenté sur la figure) du correcteur. L'extrémité de l'arbre de sortie du correcteur est apte à être reliée à un réflecteur, de façon connue en soi, pour modifier l'orientation de son faisceau.

Le correcteur comprend à la base du canon 25 une couronne 40 de forme généralement circulaire, comportant sur sa circonférence quatre pattes saillantes P venues de matière et régulièrement espacées autour de la circonférence de la couronne (ce nombre de quatre n'est bien sûr pas impératif, le correcteur pouvant comporter par exemple trois pattes réparties sur la périphérie de la couronne 40).

Les pattes P ne sont pas immédiatement adjacentes à la paroi 41 du boîtier du correcteur hors de laquelle la couronne 40 est saillante ; au contraire, une zone 42 de la couronne 40, de section circulaire et de hauteur H1, sépare les pattes P de la paroi 41 du boîtier du correcteur. La zone 42 et les autres zones circulaires de la couronne 40 ont même diamètre.

L'ensemble formé par la couronne 40 et les pattes P est réalisé par moulage d'une matière plastique d'un seul tenant avec le boîtier 20 du correcteur. Cet ensemble représente une partie du correcteur qui est saillante par rapport à la paroi essentiellement plane 41 du correcteur hors de laquelle la couronne 40 est saillante et qui est perpendiculaire à l'axe du canon.

Comme dans le cas des correcteurs connus destinés à être montés avec un joint, la couronne 40 du correcteur munie de ses pattes P permet de monter le correcteur dans une ouverture d'un élément de structure du projecteur.

La position du correcteur ainsi monté dans un projecteur est schématiquement représentée sur la figure 2, l'élément de structure interne étant ici une membrure 35 fixée à l'intérieur du boîtier du projecteur et munie d'une ouverture 50 dans laquelle le canon du correcteur est engagé.

Cet élément de structure peut également être la paroi même du boîtier du projecteur, dans lequel est alors prévue une ouverture pour l'engagement du canon du correcteur.

Dans l'exemple d'implantation d'un correcteur C dans un projecteur 30 représenté sur la figure 2, le correcteur est monté dans une ouverture 50 formée dans la membrure 35 intérieure au projecteur, et son arbre de sortie est apte à modifier l'orientation du réflecteur 32 dans lequel est montée une lampe 33. Sur la figure 2, la liaison entre le correcteur et le réflecteur est symbolisée par la ligne 36.

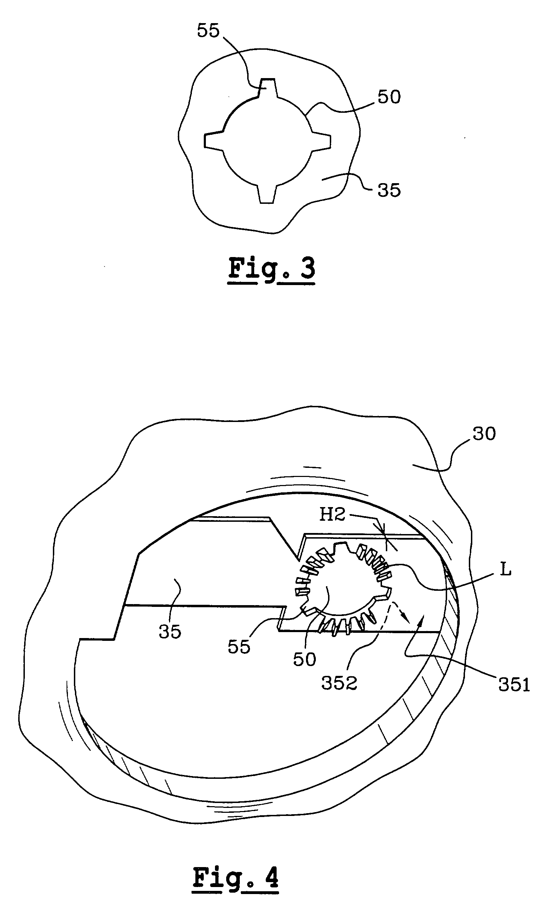

Plus précisément, pour monter le correcteur sur la membrure 35, on engage dans l'ouverture 50 le canon 25 du correcteur, ainsi que la couronne 40 dont le diamètre correspond au diamètre de l'ouverture 50 (dont le contour est représenté sur la figure 3), l'ouverture circulaire étant munie sur sa périphérie d'échancrures 55 qui correspondent au contour de la couronne 40 au niveau des pattes P et permettent ainsi l'engagement des pattes P au travers de l'ouverture 50.

Selon l'invention et comme représenté sur la figure 4, la paroi de la membrure 35 qui constitue la partie du projecteur 30 dédiée au montage du correcteur est munie de lamelles L, saillantes vers l'extérieur hors de la face 351 de la paroi de membrure qui est tournée vers le côté par lequel on amène le correcteur pour le monter (définie par convention comme la face arrière de la membrure).

Ces lamelles sont rassemblées en trois groupes adjacents à la périphérie de l'ouverture 50 au niveau des trois sections circulaires de cette périphérie définies par les trois espaces entre deux échancrures 55 (le mode de réalisation particulier de la figure 4 mettant en oeuvre une ouverture 50 à trois, et non quatre, échancrures, pour coopérer avec un correcteur à trois pattes P - on a vu que ce paramètre n'était aucunement déterminant).

Les lamelles de chaque groupe sont inclinées par rapport à la normale au plan de la membrure 35, toutes les lamelles ayant sensiblement la même inclinaison par rapport à ce plan. De la sorte, les lamelles L constituent une série de rampes inclinées sensiblement parallèles.

Ces lamelles sont venues de matière (par exemple par moulage) avec la paroi de la membrure du projecteur, hors de laquelle elles sont saillantes. Dans un mode de réalisation préféré, on réalisera les lamelles par moulage en utilisant des contre dépouilles adaptées.

Les lamelles ainsi constituées sont élastiquement déformables, et peuvent se rapprocher de la paroi de la membrure 35 sous l'effet d'une force de compression exercée vers la face 351 de la membrure.

Pour monter le correcteur dans le boîtier du projecteur, un opérateur engage la couronne 40 et les pattes P dans l'ouverture 50 de la membrure 35, en plaçant les pattes en regard des échancrures 55.

Pour que les pattes P traversent toute l'épaisseur des échancrures 55 correspondant à l'épaisseur H2 de la paroi de la membrure (qui est légèrement inférieure à la hauteur H1 qui sépare les pattes P de la paroi 41 du correcteur), l'opérateur doit comprimer le correcteur sur la face 351 de la membrure, la paroi 41 du correcteur venant en appui sur les lamelles L en déformant élastiquement ces lamelles en rapprochement de la face 351.

Une fois que les pattes ont ainsi traversé les échancrures, les lamelles étant toujours comprimées et élastiquement déformées, l'opérateur fait tourner le correcteur dans le sens de l'inclinaison des lamelles (correspondant sur la figure 4 au sens horaire) par rapport à la membrure 35, de sorte que les pattes prennent appui sur la face avant 352 de la membrure qui est opposée à la face 351 portant les lamelles, ladite face avant étant plane.

Dans cette position, la position du correcteur par rapport à la membrure est verrouillée par la coopération :
- d'une part, de la paroi 41 du correcteur et des lamelles L, cette coopération constituant un appui avec rappel élastique,
- d'autre part, des pattes P et de la face avant de la membrure, ce qui permet de maintenir le correcteur en compression sur les lamelles et de verrouiller sa position.

Il apparaît ainsi que les aménagements de la membrure 35 qui reçoit le correcteur permettent de s'affranchir de tout joint, les coopérations mentionnées ci-dessus assurant à la fois le maintien de la position du correcteur, la compensation des jeux de montage (la position du correcteur pouvant être ajustée sur la membrure 35), et l'atténuation des vibrations provenant du fonctionnement du véhicule et transmises au correcteur.

De plus, dans le cas (non représenté) où le correcteur est monté sur une ouverture d'une paroi externe du boîtier du projecteur, ces coopérations permettent également d'assurer l'étanchéité de l'ouverture 50 et donc du boîtier du projecteur.

L'invention n'est bien sûr pas limitée au mode de réalisation décrit ci-dessus; en particulier il est possible de disposer les lamelles non pas sur la face arrière 351 de la membrure, mais sur sa face avant 352.

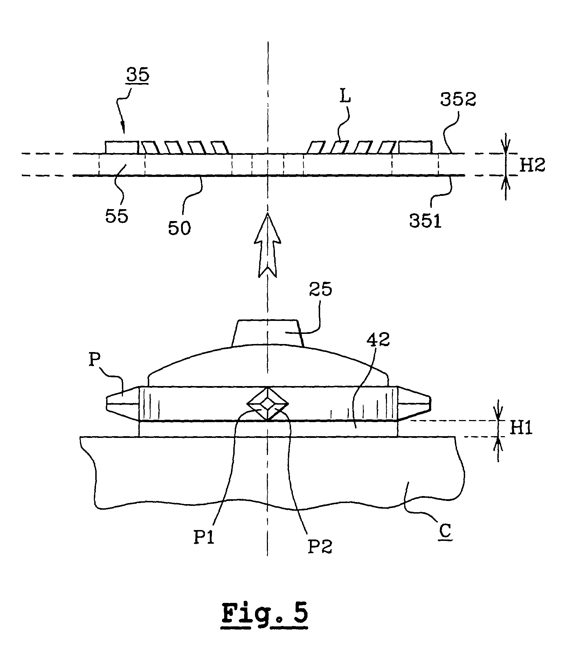

Dans ce cas, la forme des pattes P du correcteur pourra être adaptée pour que, une fois qu'une partie du canon du correcteur ait été engagée au travers de l'ouverture 50, le côté des pattes tourné vers la paroi 41 du correcteur entre aisément en coopération avec les lamelles L. On pourra par exemple prévoir une forme de pattes similaire à celle décrite en référence à la figure 5 ci-dessous.

Il est également possible selon l'invention de prévoir, au lieu de lamelles saillantes hors de la partie 35 du projecteur sur laquelle est montée le correcteur, d'autres moyens (en particulier des éléments minces) venus de matière ou non avec la membrure 35, aptes à se déformer élastiquement lors du montage pour assurer un maintien de la position du correcteur sans recouvrir à une pièce supplémentaire telle qu'un joint.

Dans une variante de l'invention qui présente l'avantage d'être particulièrement simple et économique, il est également possible de réaliser la membrure 35 sans lamelles saillantes ni aménagements particuliers, la paroi de la membrane étant essentiellement plane.

Dans ce cas, comme représenté sur la figure 5 sur laquelle on a représenté un correcteur C présenté pour son engagement dans une ouverture 50 d'une membrure 35, l'épaisseur H2 de la membrure est légèrement supérieure à la hauteur H1 (alors que dans l'exemple décrit en référence à la figure 4 l'épaisseur H2 correspondait à la hauteur H1 augmentée d'une distance supplémentaire correspondant à l'encombrement des lamelles comprimées), et la dureté du matériau de la membrure est choisie sensiblement inférieure à la dureté du matériau des pattes P.

Dans ce cas, l'opérateur engage toujours le canon du correcteur dans l'ouverture 50 et les pattes P dans les échancrures 55, et transmet au correcteur un moment de rotation pour engager les pattes P sur la face avant de la membrure.

Le fait que l'épaisseur H2 de la membrane soit légèrement supérieure à la hauteur H1 constitue a priori un obstacle à la rotation du correcteur. Cependant, la dureté des pattes étant supérieure à la dureté de la paroi de la membrane, sous l'effet du moment de rotation les pattes P attaquent la matière de la membrane qui subit une déformation plastique et permet l'engagement de pattes en regard de la paroi avant de la membrure. Dans ce cas, la déformation de la membrure est plastique et non élastique.

Dans cette variante de l'invention, le correcteur et la membrure 35 coopèrent également pour assurer la stabilité de la position du correcteur par rapport à la membrure, les pattes P étant ancrés dans la matière de ladite membrure, et pour protéger le correcteur contre les vibrations.

On pourra dans cette variante prévoir des pattes dont le côté tourné vers la paroi 41 du correcteur comprend au moins une face inclinée d'environ 45 degrés par rapport à la paroi 41 (qui coïncide avec le plan de la membrure lorsque les deux pièces sont assemblées), de manière à être tournée vers les lamelles que la face de la patte rencontrera lors de la mise en rotation du correcteur pour verrouillage.

Cette disposition permet lors de la rotation du correcteur un effet de rampe inclinée qui facilite l'engagement des pattes sur la membrure. Sur la figure 5, les pattes ont ainsi deux faces P1 et P2 inclinées symétriquement en regard de la paroi 41, de sorte que le correcteur peut être mis en rotation dans les deux sens par rapport à la membrure.

Bien entendu, l'invention n'est nullement limitée aux modes de réalisation décrits ci-dessus. Tout autre mode de réalisation faisant intervenir une partie du projecteur servant au montage du correcteur (telle qu'une membrure 35, ou toute autre partie de montage) possédant des aménagements déformables (plastiquement ou élastiquement) pour recevoir un correcteur et assurer le maintien de sa position, rentre dans le cadre de l'invention.

Et l'invention peut être mise en oeuvre avec tout type de correcteur muni de moyens de verrouillage sur une partie de montage du projecteur, la configuration avec pattes de verrouillage pouvant être remplacée par une configuration avec d'autres moyens pour assurer cette fonction de verrouillage.

Il apparaît donc que le correcteur selon l'invention est avantageux en ce qu'il ne nécessite pas de joint pour l'amortissement des vibrations dans un boîtier de projecteur, ce qui permet de réduire le nombre de composants utilisés, le prix de revient du dispositif et la durée nécessaire à l'assemblage de ce dispositif.

## Revendications

1. Projecteur (30) de véhicule automobile comprenant un réflecteur (32) et un correcteur (C) de la position dudit réflecteur en fonction de signaux de commande, le projecteur comprenant un élément de montage (35) sur lequel le correcteur est destiné à être monté, **caractérisé en ce que** l'élément de montage (35) du projecteur comprend des moyens aptes à se déformer lors du montage du correcteur sur l'élément de montage.

2. Projecteur selon la revendication 1, **caractérisé en ce que** lesdits moyens aptes à se déformer sont venus de matière avec l'élément de montage (35) du projecteur.

3. Projecteur selon la revendication 1 ou 2, **caractérisé en ce que** lesdits moyens aptes à se déformer sont aptes à stabiliser la position du correcteur sur l'élément de montage (35).

4. Projecteur selon l'une des revendications 1 à 3, **caractérisé en ce que** la déformation que peuvent subir lesdits moyens aptes à se déformer est une déformation élastique.

5. Projecteur selon la revendication 4, **caractérisé en ce que** lesdits moyens aptes à se déformer comprennent un élément mince.

6. Projecteur selon la revendication 4 ou 5, **caractérisé en ce que** lesdits moyens aptes à se déformer sont venus de matière avec l'élément de montage du projecteur.

7. Projecteur selon la revendication 5 ou 6, **caractérisé en ce que** lesdits moyens aptes à se déformer sont des lamelles (L) saillantes hors d'une face (351, 352) de l'élément de montage du projecteur.

8. Projecteur selon la revendication 7, **caractérisé en ce que** les lamelles sont adjacentes à une ouverture (50) de l'élément de montage (35) du correcteur destinée à recevoir une partie de montage (25) dudit correcteur.

9. Projecteur selon la revendication 7 ou 8, **caractérisé en ce que** les lamelles sont inclinées par rapport à la surface de l'élément de montage (35) du correcteur.

10. Projecteur selon la revendication 9, **caractérisé en ce que** toutes les lamelles ont sensiblement la même inclinaison par rapport à la surface de l'élément (35) du montage du correcteur.

11. Projecteur selon l'une des revendications 1 à 3, **caractérisé en ce que** la déformation que peuvent subir lesdits moyens aptes à se déformer est une déformation plastique.

12. Projecteur selon la revendication 11, **caractérisé en ce que** la dureté de l'élément (35) du correcteur est sensiblement inférieure à la dureté de parties (P) du correcteur qui coopèrent, lors du montage du correcteur sur ledit élément de montage (35), avec cet élément de montage pour le déformer plastiquement.

13. Projecteur selon la revendication 12, **caractérisé en ce que** l'épaisseur (H2) de l'élément de montage (35) du projecteur est supérieure à la distance (H1) séparant lesdites parties (P) du correcteur du corps du correcteur.

14. Projecteur selon la revendication 12 ou 13, **caractérisé en ce que** lesdites parties du correcteur sont des pattes (P) saillantes hors du correcteur.

15. Projecteur selon l'une des revendications précédentes, **caractérisé en ce que** le correcteur comporte des pattes (P) saillantes, dont le côté tourné vers le correcteur comporte au moins une face (P1, P2) inclinée pour faciliter l'engagement du correcteur avec la partie de montage du projecteur.
